# EUROPÄISCHE PATENTSCHRIFT

(11) **EP 1 133 194 B1**
(45) Veröffentlichungstag und Bekanntmachung des Hinweises auf die Patenterteilung: **17.06.2009**
(21) Anmeldenummer: 01105663.7
(22) Anmeldetag: 07.03.2001
(51) Int. Cl.: H04Q 1/10

(54) **Elektrisches Gerät**
Electrical device
Dispositif électrique

(30) Priorität: 08.03.2000 DE 10011934
(43) Veröffentlichungstag der Anmeldung: 12.09.2001
(73) Patentinhaber: Tenovis GmbH & Co. KG, 60362 Frankfurt am Main (DE)
(72) Erfinder: Bartel, Manfred, 65933 Frankfurt (DE); Breitbach-Hitzel, Gabriele, 63322 Roedermark (DE); Villmow, Andre, 65239 Hochheim (DE)
(74) Vertreter: Walkenhorst, Andreas

(56) Entgegenhaltungen:
- EP-A- 0 719 060
- WO-A-99/32983
- US-A- 3 965 457

## Beschreibung

### Stand der Technik

Die Erfindung geht aus von einem elektrischen Gerät und von einem Verfahren zum Betrieb eines elektrischen Gerätes nach der Gattung der unabhängigen Ansprüche. In modular aufgebauten elektrischen Geräten ist es häufig notwendig, die verschiedenen Baugruppen einzeln in einen Reset- oder sonstigen Betriebszustand zu versetzen. Hierfür befinden sich dann üblicherweise an der Frontseite jeder Baugruppe ein Resetschalter, ein Schalter für den ersten Modus, ein Schalter für den zweiten Modus usw. Als Rückmeldung über die Art des eingestellten Modus werden häufig Leuchtanzeigen, wie z.B. Leuchtdioden verwendet

Ein Bus-System für eine aus Modulen zusammengesetzte Telekommunikations-Anlage ist beispielsweise aus der EP-A- 0 719 060 bekannt.

### Vorteile der Erfindung

Das erfindungsgemäße elektrische Gerät und das Verfahren zum Betrieb eines elektrischen Gerätes mit den Merkmalen der nebengeordneten Ansprüche haben demgegenüber den Vorteil, dass auf den Baugruppen des elektrischen Systems und insbesondere an deren Frontseiten Platz für die Anordnung von Schaltern und/oder Leuchtanzeigen eingespart werden kann. Jegliche Art von Schaltern und Anzeigen auf jeder einzelnen der Baugruppen des modular aufgebauten elektrischen Gerätes stellen einen Kostenfaktor dar und beanspruchen einen Teil der Fläche der Frontseite der Baugruppen, die im Zuge zunehmender Miniaturisierung ständig kleiner wird und die im Fall von Schnittstellenbaugruppen häufig für Anschlußsysteme benötigt wird. Durch die Durchführung des Schaltvorgangs zur Schaltung einer bestimmten Baugruppe von einer zentralen Stelle aus mit einem Schaltersatz für alle Baugruppen eines modular aufgebauten Systems, erübrigt es sich, solche Schalter an jeder der Baugruppen vorzusehen. Weiterhin ist es vorteilhaft, die Schalter zum Schalten der Betriebszustände der Baugruppen eines modular aufgebauten Systems an einer zentralen Baugruppe anzubringen, da eine solche zentrale Baugruppe in aller Regel keine oder nur wenige externe Schnittstellen hat, und somit an ihrer Frontseite den für die Schalter erforderlichen Platz aufweist. Insbesondere .. Schnittstellenbaugruppen einer Nebenstellenanlage erfordern an ihrer Frontseite Anschlußsysteme, die einen Großteil der Fläche der Frontseite in Anspruch nehmen. Die Möglichkeit, Schalter an dieser Stelle einzusparen, erlaubt eine kleinere Ausführung solcher Schnittstellenbaugruppen und somit auch des gesamten modular aufgebauten elektrischen Gerätes.

Weiterhin ist es von Vorteil, dass die Möglichkeit zur Schaltung der zweiten Baugruppe zeitlich nach der Möglichkeit zur Schaltung der dritten Baugruppe zyklisch wiederholbar ist. Somit ist es möglich, zum einen die Baugruppen des elektrischen Gerätes sehr schnell zu konfigurieren, d.h. in ihren jeweils vorgegebenen Betriebszustand zu versetzen. Andererseits ermöglicht es die zyklische Wiederholung der Möglichkeit zur Schaltung von Baugruppen, dass der geschaltete Betriebszustand durch einen Bediener des elektrischen Gerätes überprüft wird und somit ein sichererer Betrieb des elektrischen Gerätes ermöglicht wird.

Weiterhin ist von Vorteil, dass die Dauer der vorgegebenen Zeitintervalle einstellbar ist. Hierdurch ist es dem Bediener des elektrischen Gerätes, der die jeweiligen Betriebszustände der Baugruppen des elektrischen Gerätes einstellen möchte, möglich, die zur Konfiguration des elektrischen Gerätes benötigte Zeit individuell einzustellen.

Weiterhin ist von Vorteil, dass als Schaltmittel ein erster Schalter und ein zweiter Schalter vorgesehen sind, wobei der erste Schalter zur Einstellung des vorgegebenen ersten Betriebszustands der zweiten Baugruppe vorgesehen ist und wobei der zweite Schalter zur Übernahme des ersten Betriebszustands durch die zweite Baugruppe während des ersten Zeitintervalls vorgesehen ist. Hierdurch ist es möglich, die Konfiguration einer Baugruppe für einen bestimmten Betriebszustand mittels des ersten Schalters unabhängig von dem für die zu schaltende Baugruppe maßgeblichen Zeitintervall vorzuwählen und in einem zweiten Schritt durch Betätigung des zweiten Schalters die Übernahme des mittels des ersten Schalters eingestellten Betriebszustands während des für die zu schaltende Baugruppe maßgeblichen Zeitintervalls durchzuführen. Auf diese Weise wird die Einstellung eines Betriebszustands von der tatsächlichen Schaltung einer bestimmten Baugruppe in diesen Betriebszustand entkoppelt.

Weiterhin ist von Vorteil, dass die erste Baugruppe erste Signalisierungsmittel umfasst, wobei die ersten Signalisierungsmittel vorgesehen sind, den von der ersten Baugruppe oder von der zweiten Baugruppe eingenommenen Betriebszustand wiederzugeben. Auf diese Weise ist eine leichte Überprüfung der jeweiligen Betriebszustände von Baugruppen an zentraler Stelle möglich.

Weiterhin ist von Vorteil, dass die zweite Baugruppe zweite Signalisierungsmittel umfasst, wobei die zweiten Signalisierungsmittel vorgesehen sind, die Möglichkeit zur Schaltung der zweiten Baugruppe wiederzugeben. Hierdurch ist es auf einfache Weise möglich, zu erkennen, in welchem Zeitintervall welche Baugruppe schaltbar ist.

Weiterhin ist von Vorteil, dass die zweiten Signalisierungsmittel vorgesehen sind, den von der zweiten Baugruppe eingenommenen Betriebszustand wiederzugeben. Hierdurch ist es möglich, die Anzeige des jeweiligen Betriebszustands einer Baugruppe besser der jeweiligen Baugruppe zuzuordnen, weil die Signalisierung eines Betriebszustands auch räumlich mit der jeweils zu schaltenden Baugruppe in Verbindung gebracht werden kann.

Weiterhin ist von Vorteil, dass die ersten und/oder die zweiten Signalisierungsmittel als Leuchtdioden vorgesehen sind. Dadurch ist eine besonders einfache und kostengünstige Realisierung der Erfindung möglich.

### Zeichnung

Ein Ausführungsbeispiel der Erfindung ist in der Zeichnung dargestellt und in der nachfolgenden Beschreibung näher erläutert. Es zeigen
Figur 1 ein elektrisches Gerät mit verschiedenen Baugruppen, die über eine Steuerleitung miteinander verbunden sind,
Figur 2 ein Ablaufdiagramm zur Durchführung eines Verfahrens zum Betrieb eines erfindungsgemäßen elektrischen Gerätes.

### Beschreibung des Ausführungsbeispiels

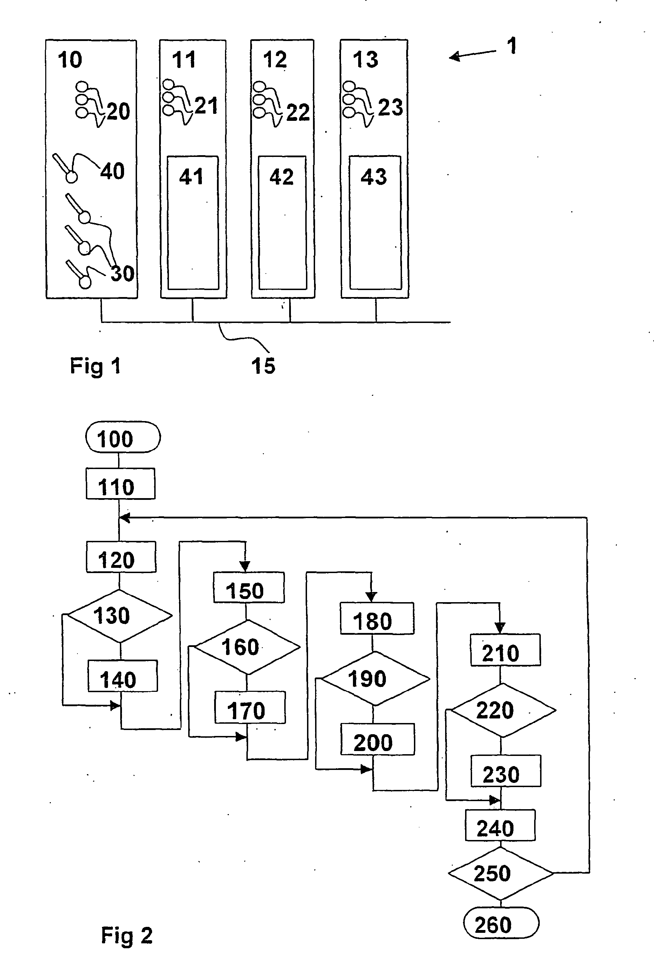

In Figur 1 ist ein elektrisches Gerät 1 dargestellt, das eine erste Baugruppe 10, eine zweite Baugruppe 11, eine dritte Baugruppe 12 und eine vierte Baugruppe 13 umfasst. Die Baugruppen 10 bis 13 des elektrischen Gerätes 1 sind beispielhaft für eine Vielzahl von Baugruppen eines modular aufgebauten elektrischen Gerätes zu verstehen. Als Beispiel eines solchen elektrischen Gerätes sei hier eine Telekommunikationsanlage, beispielsweise eine Nebenstellenanlage, genannt, die mit einer Vielzahl von unterschiedlichen Baugruppen 10 bis 13 oder Modulen 10 bis 13 ausgestattet ist. Als Beispiele solcher Module seien hier insbesondere ein zentrales Steuerungsmodul, Schnittstellenbaugruppen zur Verfügungstellung von verschiedenartigen Anschlüssen für Telekommunikationsendgeräte, untergeordnete Steuerungsbaugruppen zur Steuerung einer Anzahl von Schnittstellenbaugruppen, Speicherbaugruppen und dergleichen mehr, genannt. Erfindungsgemäß sind die Baugruppen 10 bis 13 des elektrischen Gerätes 1 über eine Steuerleitung 15 miteinander verbunden. Die Steuerleitung 15 ist insbesondere als Steuerbus des elektrischen Gerätes 1 ausgebildet. Die Steuerleitung 15 kann auch sternförmig von der ersten Baugruppe 10 zu den weiteren Baugruppen 11 bis 13 ausgeführt sein. Bei den beispielhaft genannten Telekommunikationsanlagen existiert in der Regel ein die verschiedenen Module 10 bis 13 verbindender Steuerbus, der die Aufgaben der erfindungsgemäßen Steuerleitung 15 übernimmt. Alternativ dazu ist es vorstellbar, zusätzlich zu einem in einem elektrischen Gerät 1 vorhandenen Bus bzw. Leitungsbündel die Steuerleitung 15 separat speziell für die Durchführung der erfindungsgemäßen Aufgabe vorzuziehen.

Die erste Baugruppe 10 umfasst erste Signalisierungsmittel 20. Die zweite Baugruppe 11 umfasst zweite Signalisierungsmittel 21. Die dritte Baugruppe 12 umfasst dritte Signalisierungsmittel 22. Die vierte Baugruppe 13 umfasst vierte Signalisierungsmittel 23. Die Signalisierungsmittel 20 bis 23 sind insbesondere in Form von wenigstens einer Lichtquelle vorgesehen. Insbesondere ist die Lichtquelle als Leuchtdiode (LED) vorgesehen. In der Zeichnung sind als Signalisierungsmittel 20 bis 23 jeweils drei solcher Leuchtdioden angedeutet. Die Signalisierungsmittel 20 bis 23 sind insbesondere mehrfarbig vorgesehen und werden mittels verschiedener Ansteuerungsschemata, beispielsweise zwei Zustände (eingeschaltet, ausgeschaltet), drei Zustände (eingeschaltet, blinkend, ausgeschaltet) oder dergleichen, angesteuert, so dass eine Vielzahl von Informationen durch die Signalisierungsmittel 20 bis 23 einem Bediener sichtbar gemacht werden. Weiterhin können die Lichtquellen verschiedenfarbig angesteuert werden. Darüber hinaus können als Signalisierungsmittel 20 bis 23 außer optischen auch akustische Signalisierungsmittel 20 bis 23 vorgesehen werden.

Die erste Baugruppe 10 umfasst weiterhin einen ersten Schalter 30, der insbesondere eine Mehrzahl von Einzelschaltern umfasst. Die Einzelschalter des ersten Schalters 30 dienen dazu, einen bestimmten Betriebszustand einzustellen. Werden beispielsweise als erster Schalter 30 drei Einzelschalter vorgesehen, die sich jeweils in einem eingeschalteten oder in einem ausgeschalteten Zustand befinden können, so können durch den ersten Schalter 30 maximal acht Betriebszustände durch die Stellung seiner Einzelschalter definiert werden. Der erste Schalter 30 kann jedoch beispielhaft auch als ein einzelner Mehrfachschalter (beispielsweise als Drehschalter) vorgesehen sein.

Weiterhin umfasst die erste Baugruppe 10 einen zweiten Schalter 40, der dazu dient, den mittels dem ersten Schalter 30 eingestellten Betriebszustand für eine Bestimmte der Baugruppen 10 bis 13 zu übernehmen. Die zweite Baugruppe 11 ist beispielhaft als Schnittstellenbaugruppe angedeutet und umfasst ein erstes Anschlußsystem 41. Entsprechend umfasst die dritte Baugruppe 12 ein zweites Anschlußsystem 42 und die vierte Baugruppe 13 ein drittes Anschlußsystem 43. Die Anschlußsysteme 41 bis 43 sind jedoch für die vorliegende Erfindung von untergeordneter Bedeutung, es sollte lediglich in Figur 1 eine Vorstellung von den Platzverhältnissen auf der Frontseite von Schnittstellenbaugruppen angedeutet werden.

Erfindungsgemäß wird der erste Schalter 30 zur Konfigurierung der Baugruppen 10 bis 13 genutzt. Hierzu umfasst das elektrische Gerät 1, vorzugsweise auf der ersten Baugruppe 10, eine nichtdargestellte Steuerung, die die Konfiguration der Betriebszustände der einzelnen Baugruppen 10 bis 13 steuert. Hierzu werden nacheinander gleich oder unterschiedlich lange Zeitintervalle zur Einstellung des jeweiligen Betriebszustands der Baugruppen 10 bis 13 vorgesehen. Ein erstes Zeitintervall dient beispielsweise der Einstellung eines vorgegebenen ersten Betriebszustands der zweiten Baugruppe 11. Hierzu sendet die nichtdargestellte Steuereinheit zu Beginn des ersten Zeitintervalls ein erstes Ansprechsignal zur Möglichkeit der Einstellung eines Betriebszustandes über die Steuerleitung 15 zur zweiten Baugruppe 11. Durch dieses erste Ansprechsignal wird ermöglicht, dass der vorgegebene erste Betriebszustand der zweiten Baugruppe 11 mittels eines Einstellsignals eingestellt werden kann. Das Einstellsignal wird ebenfalls von der nichtdargestellten Steuereinheit in Abhängigkeit der Schalterstellungen des ersten Schalters 30 generiert, und zwar dann, wenn mittels des zweiten Schalters 40 die Übernahme der am ersten Schalter 30 eingestellten Konfiguration ausgelöst wird. Die zweite Baugruppe 11 wird somit nicht über an ihr angebrachte Schalter eingestellt, sondern die Einstellung des vorgegebenen ersten Betriebszustands der zweiten Baugruppe 11 wird über die Einstellung der Einzelschalter des ersten Schalters 30, die Übernahme dieser Einstellung durch Betätigung des zweiten Schalters 40 und die Übertragung eines hierdurch generierten Einstellsignals von der ersten Baugruppe 10 über die Steuerleitung 15 zur zweiten Baugruppe 11 geschaltet. Um zu gewährleisten, dass das von der nicht dargestellten Steuereinheit in Abhängigkeit der Betätigung des ersten Schalters 30 und des zweiten Schalters 40 generierte Einstellsignal die zweite Baugruppe 11 einstellt, muß dieses Einstellsignal innerhalb des ersten Zeitintervalls zur zweiten Baugruppe 11 gelangen. Nach Ablauf des ersten Zeitintervalls sendet die nicht dargestellte Steuereinheit ein zweites Ansprechsignal zur dritten Baugruppe 12 und beendet damit das erste Zeitintervall. Ein auf das zweite Ansprechsignal folgendes Einstellsignal wirkt daher nicht auf die zweite Baugruppe 11 sondern auf die dritte Baugruppe 12. In zur Einstellung der zweiten Baugruppe 11 analoger Weise wird die dritte Baugruppe 12 durch die Einstellungen bzw. Betätigung des ersten Schalters 30 und des zweiten Schalters 40 durch ein weiteres Einstellsignal geschaltet. Nach Ablauf des zweiten Zeitintervalls wird ein drittes Ansprechsignal von der nicht dargestellten Steuereinheit zur vierten Baugruppe gesendet.

Die Länge der Zeitintervalle kann erfindungsgemäß von dem Bediener des elektrischen Gerätes eingestellt werden, so dass für eine schnelle Konfigurierung kurze Zeitintervalle gewählt werden können und bei einem größeren Zeitbedarf zur Einstellung der Betriebszustände längere Zeitintervalle vorgesehen werden können. Insbesondere ist es erfindungsgemäß vorgesehen, dass die Auswahl der Baugruppen durch die von der nicht dargestellten Steuereinheit ausgesandten Ansprechsignale zur Möglichkeit der Einstellung eines Betriebszustandes derart durchgeführt wird, dass die Baugruppen 10 bis 13 in zyklischer Folge angesprochen werden, d.h. dass beispielsweise zunächst die erste Baugruppe 10 angesprochen wird, anschließend die zweite Baugruppe 11, anschließend die dritte Baugruppe 12, anschließend die vierte Baugruppe 13 und daraufhin wiederum die erste Baugruppe 10, womit sich der Zyklus wiederholt. Bei einer größeren Anzahl von vorhandenen Baugruppen würde sich selbstverständlich der Zyklus verlängern.

Um einen Bediener darüber zu informieren, welche Baugruppe 10 bis 13 zu einem gegebenen Zeitpunkt einstellbar ist, werden die Signalisierungsmittel 20 bis 23 entsprechend angesteuert. Beispielsweise werden die zweiten Signalisierungsmittel 21 während des ersten Zeitintervalls derart angesteuert, dass die wenigstens eine Leuchtdiode blinkt. Dies signalisiert dem Bediener die Möglichkeit zur Schaltung der zweiten Baugruppe 11 mittels des ersten Schalters 30 und des zweiten Schalters 40. Bei einer ersten Ausführungsform des elektrischen Gerätes 1 zeigen die Signalisierungsmittel 20 bis 23 lediglich an, ob die ihnen entsprechende Baugruppe entweder konfiguriert ist, beispielsweise durch Leuchten einer LED oder ob die Baugruppe nicht konfiguriert ist, beispielsweise durch Erlöschen der Leuchtdiode, oder ob beim betrachteten Zeitpunkt die Möglichkeit zur Schaltung der Baugruppe besteht, beispielsweise durch Blinken der Leuchtdiode. In einer zweiten Ausführungsform des erfindungsgemäßen elektrischen Gerätes ist durch die Signalisierungsmittel 20 bis 23 vorgesehen, dass über die bloße Anzeige, dass ein Betriebszustand für die Baugruppe 10 bis 13 geschaltet ist oder geschaltet werden kann, hinaus auch noch angezeigt wird, welcher der möglichen Betriebszustände eingestellt ist. Dies erfordert in der Regel komplexere Signalisierungsmittel 20 bis 23, insbesondere mit mehreren Leuchtdioden bzw. mit mehrfarbigen Leuchtdioden. Bei der ersten Ausführungsform stellen die ersten Signalisierungsmittel 20 jeweils den Betriebszustand dar, der der Baugruppe 10 bis 13 entspricht, bei der die Möglichkeit zur Schaltung eines Betriebszustandes gegeben ist. Das bedeutet, dass die ersten Signalisierungsmittel 20 bei der zyklischen Abfolge der Möglichkeit zur Schaltung den Betriebszustand der jeweils abgefragten Baugruppe 10 bis 13 darstellen. Bei der zweiten Ausführungsform des erfindungsgemäßen elektrischen Gerätes wird der für eine Baugruppe 10 bis 13 jeweils eingestellte Betriebszustand auch durch die jeweiligen Signalisierungsmittel 20 bis 23 angezeigt, so dass die Einstellung, insbesondere bei einer Vielzahl oder bei komplexen Betriebszuständen, erleichtert wird. Demgegenüber ist jedoch ein erhöhter Aufwand bei den den Baugruppen 11 bis 13 zugeordneten Signalisierungsmittel 21 bis 23 erforderlich.

In Figur 2 ist ein Ablaufdiagramm zur Durchführung eines erfindungsgemäßen Verfahrens dargestellt. Bei einem ersten Programmpunkt 100 wird ein Programm zur Einstellung der Betriebszustände der Baugruppen 10 bis 13 gestartet. Anschließend verzweigt das Programm zum zweiten Programmpunkt 110, bei dem eine Zählvariable auf einen voreingestellten Wert gesetzt wird, der angibt, wie viele Abfragezyklen vor Abbruch des Programms durchlaufen werden sollen. Anschließend verzweigt das Programm zu einem dritten Programmpunkt 120. Beim dritten Programmpunkt 120 sendet die nicht dargestellte Steuereinheit das erste Ansprechsignal über die Steuerleitung 15 zur zweiten Baugruppe 11. Damit besteht die Möglichkeit zur Schaltung der zweiten Baugruppe 11 durch den ersten Schalter 30 und den zweiten Schalter 40. Die zweiten Signalisierungsmittel 21 geben entweder - zweite Ausführungsform - den bei der zweiten Baugruppe 11 einstellten Betriebszustand an oder - erste Ausführungsform - signalisieren zumindest, dass die zweite Baugruppe 11 geschaltet werden kann. Das Programm verzweigt zum vierten Programmpunkt 130, wo geprüft wird, ob ein Einstellsignal über die Steuerleitung 15 innerhalb des ersten Zeitintervalls gesendet wurde. In diesem Fall wird zu einem fünften Programmpunkt 140 verzweigt, andernfalls wird zu einem sechsten Programmpunkt 150 verzweigt. Beim fünften Programmpunkt 140 wird die zweite Baugruppe 11 entsprechend dem während des ersten Zeitintervalls über die Steuerleitung 15 gesendeten Einstellsignals geschaltet. Der Programmfluß verzweigt weiter zum sechsten Programmpunkt 150. Beim sechsten Programmpunkt 150 wird durch zweites Ansprechsignal, das von der nicht dargestellten Steuereinheit über die Steuerleitung 15 gesendet wird, die dritte Baugruppe 12 angesprochen, so dass diese geschaltet werden kann. Hierdurch wird das zweite Zeitintervall gestartet. Der Programmfluß verzweigt weiter zu einem siebten Programmpunkt 160, wo geprüft wird, ob während des zweiten Zeitintervalls ein Einstellsignal über die Steuerleitung 15 gesendet wird. In diesem Fall verzweigt der Programmfluß zu einem achten Programmpunkt 170. Andernfalls verzweigt der Programmfluß zu einem neunten Programmpunkt 180. Beim achten Programmpunkt 170 wird in zur Schaltung der zweiten Baugruppe 11 analogen Weise die dritte Baugruppe 12 geschaltet und es wird zum neunten Programmpunkt 180 weiterverzweigt. Beim neunten Programmpunkt 180 wird durch das dritte Ansprechsignal über die Steuerleitung 15 die vierte Baugruppe 13 aktiviert und ein entsprechendes drittes Zeitintervall gestartet, woraufhin der Programmfluß zu einem zehnten Programmpunkt 190 weiterverzweigt, wo geprüft wird, ob ein Einstellsignal gesendet wurde. In diesem Fall wird zu einem elften Programmpunkt 200, andernfalls zu einem zwölften Programmpunkt 210 verzweigt. Beim elften Programmpunkt 200 wird die vierte Baugruppe 13 entsprechend dem Einstellsignal geschaltet und es wird zum zwölften Programmpunkt 210 verzweigt. Beim zwölften Programmpunkt 210 wird in analoger Weise die erste Baugruppe 10 aktiviert, so dass diese mittels dem ersten Schalter 30 oder dem zweiten Schalter 40 eingestellt werden kann, womit ein viertes Zeitintervall gestartet wird und zu einem dreizehnten Programmpunkt 220 verzweigt wird, bei dem geprüft wird, ob während des vierten Zeitintervalls der zweite Schalter 40 betätigt wird, so dass die erste Baugruppe 10 geschaltet wird. Ist dies der Fall, so wird zu einem vierzehnten Programmpunkt 230 verzweigt andernfalls wird zu einem fünfzehnten Programmpunkt 240 verzweigt. Beim vierzehnten Programmpunkt 230 wird die erste Baugruppe 10 gemäß der Einstellung des ersten Schalters 30 geschaltet und es wird zum fünfzehnten Programmpunkt 240 verzweigt. Beim fünfzehnten Programmpunkt 240 wird die Zählvariable um 1 erniedrigt und zu einem sechzehnten Programmpunkt 250 verzweigt. Beim sechzehnten Programmpunkt 250 wird geprüft, ob die maximale Anzahl der zu durchlaufenden Abfragezyklen, beispielsweise dadurch, dass die Zählvariable den Wert Null hat, erreicht ist. In diesem Fall wird zu einem siebzehnten Programmpunkt 260 verzweigt, der den Programmablauf abschließt. Andernfalls wird zum dritten Programmpunkt 120 verzweigt.

Es wird ein elektrisches Gerät und ein Verfahren zum Betrieb eines elektrischen Gerätes vorgeschlagen, das geeignet ist, mehrere Baugruppen durch Schaltmittel von einer ersten Baugruppe aus zu schalten bzw. zu konfigurieren.

## Patentansprüche

1. Elektrisches Gerät (1), insbesondere Kommunikationsanlage, mit einer ersten Baugruppe (10), mit einer zweiten Baugruppe (11) und mit einer dritten Baugruppe (12), wobei die zweite Baugruppe (11) und die dritte Baugruppe (12) jeweils mit der ersten Baugruppe (10) über wenigstens eine Steuerleitung (15) verbunden sind, wobei die Baugruppen (10, 11, 12) jeweils vorgesehen sind, einen Betriebszustand aus einer Mehrzahl von Betriebszuständen einzunehmen, wobei der Betriebszustand einer Baugruppe (10, 11, 12) durch wenigstens einen Schaltvorgang einstellbar ist,
**dadurch gekennzeichnet, dass**
der ersten Baugruppe (10) Schaltmittel (30, 40) zugeordnet sind und dass die zweite Baugruppe (11) mittels der Schaltmittel (30, 40) über die wenigstens eine Steuerleitung (15) und nur während eines vorgegebenen ersten Zeitintervalls eines ersten Zyklus in einen vorgegebenen ersten Betriebszustand schaltbar ist und dass die dritte Baugruppe (12) mittels der Schaltmittel (30, 40) über die wenigstens eine Steuerleitung (15) und nur während eines vorgegebenen zweiten Zeitintervalls, nach Ablauf des ersten Zeitintervalls, im ersten Zyklus, in einen vorgegebenen zweiten Betriebszustand schaltbar ist.

2. Elektrisches Gerät (1) nach Anspruch 1, **dadurch gekennzeichnet, dass** die Möglichkeit zur Schaltung der zweiten Baugruppe (11) zeitlich nach der Möglichkeit zur Schaltung der dritten (12) Baugruppe zyklisch wiederholbar ist.

3. Elektrisches Gerät (1) nach Anspruch 1 oder 2, **dadurch gekennzeichnet, dass** die Dauer der vorgegebenen Zeitintervalle einstellbar ist.

4. Elektrisches Gerät (1) nach einem der vorhergehenden Ansprüche, **dadurch gekennzeichnet, dass** als Schaltmittel (30, 40) ein erster Schalter (30) und ein zweiter Schalter (40) vorgesehen sind, wobei der erste Schalter (30) zur Einstellung des vorgegebenen ersten Betriebszustands der zweiten Baugruppe (11) vorgesehen ist und wobei der zweite Schalter (40) zur Übernahme des ersten Betriebszustands durch die zweite Baugruppe (11) während des ersten Zeitintervalls vorgesehen ist.

5. Elektrisches Gerät (1) nach einem der vorhergehenden Ansprüche, **dadurch gekennzeichnet, dass** die erste Baugruppe (10) erste Signalisierungsmittel (20) umfaßt, wobei die ersten Signalisierungsmittel vorgesehen sind, den von der ersten Baugruppe (10) oder der zweiten Baugruppe (11) eingenommenen Betriebszustand wiederzugeben.

6. Elektrisches Gerät (1) nach Anspruch 5, **dadurch gekennzeichnet, dass** die zweite Baugruppe (11) zweite Signalisierungsmittel (21) umfaßt, wobei die zweiten Signalisierungsmittel (21) vorgesehen sind, die Möglichkeit zur Schaltung der zweiten Baugruppe (11) wiederzugeben.

7. Elektrisches Gerät (1) nach Anspruch 5, **dadurch gekennzeichnet, dass** die zweiten Signalisierungsmittel (21) vorgesehen sind, den von der zweiten Baugruppe (11) eingenommenen Betriebszustand wiederzugeben.

8. Elektrisches Gerät (1) nach Anspruch 5, 6 oder 7, **dadurch gekennzeichnet, dass** die ersten und/oder die zweiten Signalisierungsmittel (20, 21) als Leuchtdioden vorgesehen sind.

9. Verfahren zum Betrieb eines elektrischen Gerätes (1), insbesondere einer Kommunikationsanlage, mit einer ersten Baugruppe (10), einer zweiten Baugruppe (11) und einer dritten Baugruppe (12), wobei die zweite Baugruppe (11) und die dritte Baugruppe (12) jeweils mit der ersten Baugruppe (10) über wenigstens eine Steuerleitung (15) verbunden sind, wobei die Baugruppen (10, 11, 12) jeweils vorgesehen sind, einen Betriebszustand aus einer Mehrzahl von Betriebszuständen einzunehmen, wobei der Betriebszustand einer Baugruppe (10, 11, 12) durch wenigstens einen Schaltvorgang gestellt wird,
**dadurch gekennzeichnet,**
**dass** der ersten Baugruppe (10) Schaltmittel zugeordnet sind, wobei nur während eines vorgegebenen ersten Zeitintervalls eines ersten Zyklus die Möglichkeit zur Schaltung der zweiten Baugruppe (11) mittels der Schaltmittels (30,40) über die wenigstens eine Steuerleitung (15) besteht und wobei nur während eines zweiten Zeitintervalls, nach Ablauf des ersten Zeitintervalls, im ersten Zyklus, die Möglichkeit zur Schaltung der dritten Baugruppe (12) mittels der Schaltmittels (30,40) über die wenigstens eine Steuerleitung (15) besteht.

## Claims

1. An electrical device (1), in particular a communication installation, having a first module (10), having a second module (11), and having a third module (12), the second module (11) and the third module (12) being connected each with the first module (10) via at least one control line (15), each of the modules (10, 11, 12) being provided for taking an operating mode from a plurality of operating modes, the operating mode of a module (10, 11, 12) being adjustable by at least one switching process,
**characterized in**
**that** switching means (30, 40) are associated to the first module (10) and that the second module (11) can be switched into a preset first operating mode by means of the switching means (30, 40) via at least one control line (15) and only during a preset first time interval of a first cycle, and that the third module (12) can be switched into a preset second operating mode by means of the switching means (30, 40) via at least one control line (15) and only during a preset second time interval, after expiry of the first time interval, in the first cycle.

2. The electrical device (1) according to claim 1, **characterized in that** the possibility to switch the second module (11) can cyclically be repeated, following the possibility to switch the third module (12).

3. The electrical device (1) according to claim 1 or claim 2, **characterized in that** the duration of the preset time intervals can be adjusted.

4. The electrical device (1) according to any of the preceding claims, **characterized in that** a first switch (30) and a second switch (40) are provided as switching means (30, 40), the first switch (30) being provided for adjusting the preset first operating mode of the second module (11) and the second switch (40) being provided for take-over of the first operating mode by the second module (11) during the first time interval.

5. The electrical device (1) according to any of the preceding claims, **characterized in that** the first module (10) comprises first signaling means (20), the first signaling means (20) being provided for indicating the operating mode taken by the first module (10) or the second module (11).

6. The electrical device (1) according to claim 5, **characterized in that** the second module (11) comprises second signaling means (21), the second signaling means (21) being provided for indicating the possibility to switch the second module (11).

7. The electrical device (1) according to claim 5, **characterized in that** the second signaling means (21) are provided for indicating the operating mode taken by the second module (11).

8. The electrical device (1) according to any of claims 5, 6 or 7, **characterized in that** the first and/or second signaling means (10, 21) are provided as light-emitting diodes.

9. A method for operating an electrical device (1), in particular a communication installation, having a first module (10), a second module (11), and a third module (12), the second module (11) and the third module (12) being connected each with the first module (10) via at least one control line (15), each of the modules (10, 11, 12) being provided for taking an operating mode from a plurality of operating modes, the operating mode of a module (10, 11, 12) being adjusted by at least one switching process,
**characterized in**
**that** switching means are associated to the first module (10), the possibility to switch the second module (11) by means of the switching means (30, 40) via the at least one control line (15) existing only during a preset first time interval of a first cycle, and the possibility to switch the third module (12) by means of the switching means (30, 40) via the at least one control line (15) existing only during a second time interval, after expiry of the first time interval, in the first cycle.

## Revendications

1. Dispositif électrique (1), en particulier une installation de communication, avec un premier module (10), avec un deuxième module (11) et avec un troisième module (12), le deuxième module (11) et le troisième module (12) étant connectés chacun au premier module (10) à travers au moins une ligne de commande (15), chacun des modules (10, 11, 12) étant prévu pour prendre un état de fonctionnement d'une pluralité d'états de fonctionnement, l'état de fonctionnement d'un module (10, 11, 12) étant réglable par au moins un procédé de commutation,
caractériseé en ce
que des moyens de commutation (30, 40) sont assignés au premier module (10) et que le deuxième module (11) peut être commuté dans un premier état de fonctionnement prédéterminé par les moyens de commutation (30, 40) à travers au moins une ligne de commande (15) et seulement pendant un premier intervalle de temps prédéterminé d'un premier cycle, et que le troisième module (12) peut être commuté dans un deuxième état de fonctionnement prédéterminé par les moyens de commutation (30, 40) à travers au moins une ligne de commande (15) et seulement pendant un deuxième intervalle de temps prédéterminé, après l'expiration du premier intervalle de temps, dans le premier cycle.

2. Dispositif électrique (1) selon la revendication 1, caractériseé en ce que la possibilité de commuter le deuxième module (11) peut être répétée cycliquement après la possibilité de commuter le troisième module (12).

3. Dispositif électrique (1) selon la revendication 1 ou la revendication 2, caractériseé en ce que la durée des intervalles de temps prédéterminés peut être réglée.

4. Dispositif électrique (1) selon l'une quelconque des revendications précédentes, caractériseé en ce qu'un premier commutateur (30) et un deuxième commutateur (40) sont prévus en tant que moyens de commutation (30, 40), le premier commutateur (30) étant prévu pour régler le premier état de fonctionnement prédéterminé du deuxième module (11) et le deuxième commutateur (40) étant prévu pour transférer le premier état de fonctionnement au deuxième module (11) pendant le premier intervalle de temps.

5. Dispositif électrique (1) selon l'une quelconque des revendications précédentes, caractériseé en ce que le premier module (10) comprend des premiers moyens de signalisation (20), les premiers moyens de signalisation (20) étant prévus pour indique l'état de fonctionnement pris par le premier module (10) ou le deuxième module (11).

6. Dispositif électrique (1) selon la revendication 5, caractériseé en ce que le deuxième module (11) comprend des deuxièmes moyens de signalisation (21), les deuxièmes moyens de signalisation (21) étant prévus pour indiquer la possibilité de commuter le deuxième module (11).

7. Dispositif électrique (1) selon la revendication 5, caractériseé en ce que les deuxièmes moyens de signalisation (21) sont prévus pour indiquer l'état de fonctionnement pris par le deuxième module (11).

8. Dispositif électrique (1) selon l'une quelconque des revendications 5, 6 ou 7, caractériseé en ce que les premiers et/ou les deuxièmes moyens de signalisation (10, 21) sont prévus comme diodes luminescentes.

9. Méthode pour actionner un dispositif électrique (1), en particulier une installation de communication, avec un premier module (10), un deuxième module (11), et un troisième module (12), le deuxième module (11) et le troisième module (12) étant connectés chacun au premier module (10) à travers au moins une ligne de commande (15), chacun des modules (10, 11, 12) étant prévu pour prendre un état de fonctionnement d'un pluralité d'états de fonctionnement, l'état de fonctionnement d'un module (10, 11, 12) étant réglé par au moins un procédé de commutation,
**caractériseé en ce**
que des moyens de commutation sont assignés au premier module (10), la possibilité de commuter le deuxième module (11) par les moyens de commutation (30, 40) à travers la, au moins une, ligne de commande (15) n'étant donnée que pendant un premier intervalle de temps prédéterminé d'un premier cycle, et la possibilité de commuter le troisième module (12) par les moyens de commutation (30, 40) à travers la, au moins une, ligne de commande (15) n'étant donnée que pendant un deuxième intervalle de temps, après l'expiration du premier intervalle de temps, dans le premier cycle.
